# EUROPÄISCHE PATENTSCHRIFT

(11) **EP 0 633 707 B1**
(45) Veröffentlichungstag und Bekanntmachung des Hinweises auf die Patenterteilung: **08.09.1999**
(21) Anmeldenummer: 94108627.4
(22) Anmeldetag: 06.06.1994
(51) Int. Cl.: H04Q 11/04, H04Q 3/545

(54) **Fernsteuerbares Kommunikationssystem mit einem Fernübertragungsmodul**
Remotely controlled communications system with a transmission module
Système de communication télécommandé avec un module de transmission

(30) Priorität: 28.06.1993 DE 4321481
(43) Veröffentlichungstag der Anmeldung: 11.01.1995
(73) Patentinhaber: SIEMENS AKTIENGESELLSCHAFT, 80333 München (DE)
(72) Erfinder: Klein, Josef, Dipl.-Ing., D-83623 Dietramzell (DE); Stinner, Klaus, Dipl.-Ing., D-85296 Rohrbach (DE)

(56) Entgegenhaltungen:
- US-A- 4 768 188
- PATENT ABSTRACTS OF JAPAN vol. 10, no. 137 (E-405) 21. Mai 1986 & JP-A-61 001 198 (NIPPON DENKI)
- HASLER MITTEILLUNGEN, Bd.46, Nr.2, 1987, BERN CH Seiten 25 - 34 G.BIERI ET AL. 'Das AXE-System in einer ISDN- und Swissnet-1-Umgebung'
- JAPAN TELECOMMUNICATION REVIEW., Bd.26, Nr.4, 1984, TOKYO JP Seiten 227 - 235 K.AKINO ET AL. 'D60 and D70 Digital Switching System Evolution'

## Beschreibung

Die Erfindung betrifft ein fernsteuerbares Kommunikationssystem mit einer zentralen Rechnereinrichtung, an die über zumindest eine PCM-orientierte Systembusschnittstelle eine mit Kommunikationsendgeraten verbindbare Teilnehmeranschlußeinrichtungen und zumindest eine Verbindungsleitungsanschlußeinrichtungen anschließbar sind und im Sinne eines Informationsaustausches zum Fernsteuern des Kommunikationssystems dieses über ein Kommunikationsnetz mit einer Servicezentrale verbindbar ist.

Ein derartiges Kommunikationssystem ist aus der US-Patentschrift 5 047 923 bekannt. Für den Betrieb, das Verwalten, das Warten und Diagnostizieren des Kommunikationssystems ist ein betriebstechnischer Anschluß - meist durch eine V.24-Schnittstelle realisiert - vorgesehen, über den an bzw. von einer an diese Betriebsschnittstelle angeschlossenen Betriebseinrichtung - z.B. ein Bedien-Personalcomputer - übermittelte Informationen direkt von oder zu der zentralen Rechnereinrichtung des Kommunikationssystems übertragen werden.

Das Fernsteuern, d.h. der Fernbetrieb, das Fernwarten, das Fernverwalten und das Ferndiagnostizieren wird dadurch bewirkt, daß die betriebstechnische Schnittstelle über ein privates oder öffentliches Netz an eine Servicezentrale geführt wird. Die Übertragung der zu übermittelnden Informationen wird mit Hilfe einer Übertragungseinrichtung durchgeführt, mit deren Hilfe die zu übermittelnden, digitalen Informationen zum Fernsteuern der Kommunikationssysteme derart umgesetzt werden, daß sie z.B. über das Fernsprechnetz - d.h. analoge Informationsübertragung und Fernsprechsignalisierung - oder ein ISDN-Netz (Integrated Services Digital Network) - d.h. digitale Informationsübermittlung und ISDN-Signalisierung - übertragen werden können. Für den Verbindungsauf- und -abbau der Verbindungen im Sinne des Fernsteuerns der Kommunikationssysteme ist sowohl in den Kommunikationssystemen bzw. in der Servicezentrale als auch in den Übertragungseinrichtungen ein erheblicher schaltungs- und programmtechnischer Aufwand erforderlich.

Die der Erfindung zugrunde liegende Aufgabe besteht darin, im Sinne eines Fernsteuerns von Kommunikationssystemen durch eine Servicezentrale den hierzu erforderlichen Informationsaustausch unter Berücksichtigung eines möglichst geringen zusätzlichen Aufwands in den eingangs angegebenen Kommunikationssystemen über Kommunikationsnetze mit unterschiedlicher Signalisierung und Übertragung zu ermöglichen. Die Aufgabe wird ausgehend von einem Kommunikationssystem gemäß den Merkmalen des Oberbegriffs des Anspruchs 1 durch dessen kennzeichnende Merkmale gelöst.

Der wesentliche Aspekt des erfindungsgemäßen Kommunikationssystems ist darin zu sehen, daß mit einem einzigen Fernübertragungsmodul, das der zentralen Rechnereinrichtung des Kommunikationssystems direkt zugeordnet ist, der Informationsaustausch zwischen zentraler Rechnereinrichtung und der Servicezentrale über Kommunikationsnetze mit unterschiedlicher Signalisierung und Informationsübertragung durchführbar wird. Das Fernübertragungsmodul und die zentrale Rechnereinrichtung weisen jeweils eine Busrechnerschnittstelle und eine PCM-orientierte Systembusschnittstelle auf, die jeweils miteinander verbunden sind. Über die Busrechnerschnittstelle wird einerseits bei Empfang von die Fernsteuerung des jeweiligen Kommunikationssystems bewirkenden Informationen von der Servicezentrale die zentrale Rechnereinrichtung zur Übernahme der Informationen veranlaßt und andererseits wird bei Übermitteln von Informationen von der zentralen Rechnereinrichtung zu der Servicezentrale das Fernübertragungsmodul zum Übermitteln, d.h. Senden der Informationen veranlaßt. Hierzu wird ein festgelegtes Protokoll für die Übermittlung der Nutz- und Steuerinformationen verwendet. Vorzugsweise sind bei einem Fernsprechnetz Protokolle vorgesehen, bei denen Steuerinformationen innerhalb eines seriellen Nutzinformationsstromes übermittelbar sind. Für das ISDN-Netz ist das ISDN-Signalisierungsprotokoll bestimmt.

Die zentrale Rechnereinrichtung steuert üblicherweise ein Koppelfeld, das in Abhängigkeit von einer mit den angeschlossenen Kommunikationsendgeraten oder einem angeschlossenen Kommunikationsnetz abgewickelten Wahl- bzw. Signalisierungsprozedur eingestellt wird. Durch die Anbindung des Fernübertragungsmoduls direkt an die zentrale Rechnereinrichtung ist durch diese das Koppelfeld bei einer Informationsübermittlung an die Servicezentrale direkt einstellbar. Durch diese Maßnahme kann ein vorhandener Verbindungsleitungsanschluß des Kommunikationssystems direkt mit einem Kommunikationsnetz - z.B. dem Fernsprechnetz oder ISDN-Netz - verbunden werden. Über dieses Kommunikationsnetz ist das Kommunikationssystem mit der Servicezentrale temporär im Sinne eines Fernsteuern des Kommunikationssystems verbindbar. Es entfällt somit ein erheblicher schaltungstechnischer und programmtechnischer Aufwand für eine mit einer Verbindungsauf- und -abbauprozedur ausgestatteten Betriebsschnittstelle des Kommunikationssystems, an die zusätzlich eine Übertragungseinrichtung - z.B. ein Modem oder eine ISDN-Anschlußeinrichtung - anzuschließen ist.

Das Fernübertragungsmodul ist durch einen Zugriffsspeicher, eine Modemeinheit, eine SICOFI-Einheit, eine Peripheriesteuerung und durch ein Mikroprozessorsystem gebildet - Anspruch 2. Diese Aufteilung der Funktionen ist auf eine besonders vorteilhafte Realisierung durch integrierte Telekommunikationsschaltkreise abgestimmt - Anspruch 9. Durch die auf integrierte Telekommunikationsschaltkreise abgestimmte Funktionsaufteilung ist zum einen eine sehr wirtschaftliche Realisierung und zum anderen eine sehr platzsparende Realisierung des Fernübertragungsmoduls möglich. Bei einer derartigen, vorteilhaften Realisierung ist das Fernübertragungsmodul auf eine Baugruppe der zentralen Rechnereinrichtung aufsteckbar - Anspruch 8.

Durch diese Aufteilung der Funktionen kann darüberhinaus in einfacher, d.h. in besonders vorteilhafter Weise die Einstellung auf Kommunikationsnetze mit unterschiedlicher Signalisierung bzw. Informationsübertragung erreicht werden. Vorzugsweise ist eine Einstellung eines Fernsprechnetzmodus mit der Fernsprechsignalisierung und der 'analogen' Informationsübermittlung und eine Einstellung eines ISDN-Netzmodus mit der ISDN-Signalisierung und der 'digitalen' Informationsübermittlung vorgesehen - Anspruch 10. Die Einstellung wird von der zentralen Rechnereinrichtung initialisiert und durch das Mikroprozessorsystem in dem Fernübertragungsmodul bewirkt. Hierbei wird der Informationsfluß innerhalb des Fernübertragungsmoduls bei einer Fernsprechnetzeinstellung über die SICOFI-Einheit und die Modemeinheit und bei der ISDN-Netzeinstellung vom Zugriffsspeicher bzw. der Peripheriesteuerung direkt zur Peripheriesteuerung bzw. zum Zugriffsspeicher gesteuert. Für die Steuerung der Modemeinheit - d.h. Steuerung der Modemeinheit z.B. in einen Sende- oder Empfangsmodus - sind vorzugsweise Protokolle vorgesehen, bei den die Steuerinformationen innerhalb des Informationsstromes übermittelt wird. Die kommunikationsnetzspezifische Signalisierung wird durch im Kommunikationssystem angeordnete Verbindungsleitungsanschlußeinheit zusammen mit der zentralen Rechnereinrichtung gesteuert.

In der Peripheriesteuerung des Fernübertragungsmoduls ist eine Signalisierungskanalsteuerung, eine Vermittlungseinheit und eine Schnittstelleneinheit vorgesehen - Anspruch 3. Die Vermittlungseinheit stellt ein im Zeitlagenvielfach wirkendes Koppelfeld für die Vermittlung von bis zu 64 à 64 KBit/s - Nachrichtenkanälen dar, wobei der Vermittlungseinheit zu vermittelnden Nachrichtenkanäle über interne, ISDN-orientierte Systembusschnittstellen zugeführt werden. Eine Systembusschnittstelle weist beispielsweise vier gemultiplexte, bidirektionale 64 KBit/s - Nachrichtenkanäle auf, in die die zu übermittelnden Informationen in PCM-kodierter Form eingefügt sind.

Gemäß einer vorteilhaften Ausgestaltung des ferngesteuerten Kommunikationssystems ist die interne, ISDN-orientierte Systembusschnittstelle durch jeweils eine in Richtung zentraler Rechnereinrichtung und Modemeinheit wirkende Datenleitung, eine Rahmensynchronisiersignale übermittelnde Rahmensynchronleitung, und eine Datenübernahmeleitung gebildet - Anspruch 4. Die über die Datenleitung zu übermittelnden digitalen Informationen werden vorteilhaft mit einer Übertragungsgeschwindigkeit von 256 Kbit/s übertragen. Eine auf die Datenübertragungsgeschwindigkeit abgestimmte Frequenz der Rahmensynchronisiersignale beträgt hierbei 8 kHz, wobei der Datenübernahmetakt auf der Datenübernahmetaktleitung eine Frequenz von 512 kHz aufweist.

Gemäß einer weiteren vorteilhaften Weiterbildung des ferngesteuerten Kommunikationssystems ist die Modemeinrichtung gemäß der CCITT-Empfehlung V.32 bis realisiert - Anspruch 5. Die Realisierung bezieht sich insbesondere auf das in der CCITT-Empfehlung V.32 bis angegebene Übertragungsverfahren. Weiterhin sind Datenkorrektur- und Datenkompressionsverfahren gemäß den CCITT-Empfehlungen V.42, V.42 bis und NMP2-5 implementierbar. Gemäß CCITT-Empfehlung V.32 bis werden die digitalen Informationssignale mit Hilfe einer Quadraturamplituden-Modulation bzw. Demodulation übermittelt. Ein in der V.32 bis-Empfehlung angegebenes Wählverfahren entfällt, da der Verbindungsauf- und -abbau zu und von der Servicezentrale durch die zentrale Rechnereinrichtung des jeweiligen Kommunikationssystems direkt bewirkt wird.

Aufgrund der direkten Verbindungssteuerung durch die zentrale Rechnereinrichtung ist ein die jeweiligen Kommunikationssysteme fernsteuernde Servicezentrale über ein öffentliches oder privates Kommunikationsnetz direkt mit einem Anschluß einer Verbindungsleitungsanschlußeinrichtung des Kommunikationsnetzes verbindbar - Anspruch 6. Durch diese Maßnahme kann der aufwendige Anschluß an die Betriebsschnittstelle des Kommunikationsnetzes entfallen und ein bereits vorhandener Anschluß einer Verbindungsleitungsanschlußeinrichtung benutzt werden.

Im folgenden wird das erfindungsgemäße, ferngesteuerte Kommunikationssystem an Hand zweier Blockschaltbilder näher erläutert. Dabei zeigen
Fig. 1 in einem Blockschaltbild den Anschluß einer Servicezentrale an ein Kommunikationssystem und
Fig. 2 in einem Blockschaltbild den Aufbau eines Fernübertragungsmoduls.

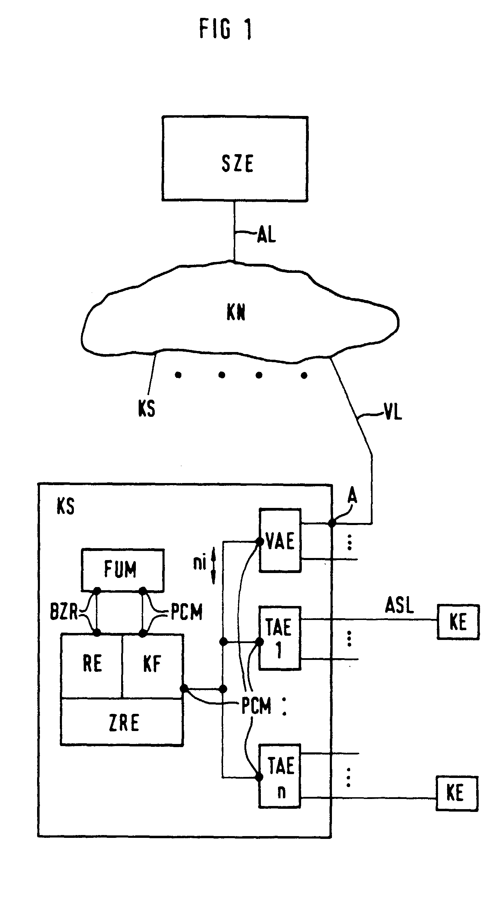

Fig. 1 zeigt in einem Blockschaltbild eine Servicezentrale SZE, die über eine Anschlußleitung AL an ein Kommunikationsnetz KN angeschlossen ist, das über eine Verbindungsleitung VL mit einem Kommunikationssystem KS verbunden ist. Die Servicezentrale SZE ist beispielsweise durch einen Personalcomputer realisiert, der mit einer Zugangseinrichtung an das Kommunikationsnetz KN ausgestattet ist. Mit Hilfe dieser Servicezentrale SZE werden mehrere, durch Punkte angedeutete, an das Kommunikationsnetz KN angeschlossene Kommunikationssysteme KS ferngesteuert, d.h. fernbetrieben, fernverwaltet, ferngewartet und ferndiagnostiziert. Hierzu sind in der Servicezentrale SZE entsprechende, programmtechnisch realisierte Fernsteuerroutinen implementiert.

Das Kommunikationsnetz stellt beispielsweise ein Fernsprechnetz oder ein ISDN-Netz (Integrated Services Digital Network) dar.

In dem dargestellten Kommunikationssystem KS ist die vom Kommunikationsnetz KN herangeführte Verbindungsleitung VL an einen Anschluß A einer Verbindungsleitungsanschlußeinrichtung VAE angeschlossen. Die Servicezentrale SZE sowie die Verbindungsleitungsanschlußeinrichtung VAE sind entsprechend dem vorgesehenen Kommunikationsnetz KN - Fernsprechnetz oder ISDN-Netz - ausgestaltet. Dies bedeutet eine entsprechende schaltungstechnische und programmtechnische Realisierung hinsichtlich der physikalischen und prozeduralen Eigenschaften des vorgesehenen Kommunikationsnetzes KN.

Im Kommunikationssystem sind des weiteren Teilnehmeranschlußeinrichtungen TAE1..n angeordnet, an die über Anschlußleitungen ASL Kommunikationsendgeräte KE angeschlossen sind. In Fig. 1 ist für jede Teilnehmeranschlußeinrichtung TAE1..N ein Kommunikationsendgerät KE beispielhaft dargestellt und die weiteren Kommunikationsendgeräte KE sind durch Punkte angedeutet.

Das Kommunikationssystem KS enthält des weiteren eine zentrale Rechnereinheit ZRE, die durch ein Koppelfeld KF und eine Rechnereinheit RE gebildet ist. Die Rechnereinheit RE ist beispielsweise durch ein handelsübliches Mikroprozessorsystem realisiert, das durch vermittlungs- und betriebstechnische Programme gesteuert wird. Das digitale Koppelfeld KF ist durch PCM-orientierte, gemultiplexte digitale Informationen vermittelnde Raum- und/oder Zeitlagenvielfache gebildet. Die zentrale Rechnereinrichtung ZRE weist eine PCM-orientierte Systembusschnittstelle PCM auf, die mit dem Koppelfeld KF der zentralen Rechnereinrichtung ZRE verbunden ist. Diese PCM-orientierte Systembusschnittstelle PCM ist mit den in jeder Verbindungsleitungsanschluß- oder Teilnehmeranschlußleitungseinrichtung VAE, TAE1..n realisierten, PCM-orientierten Systembusschnittstelle PCM verbunden. Über diese PCM-orientierten Systembusschnittstellen PCM werden die von den Kommunikationsendgeraten KE oder den Verbindungsleitungen VL übermittelten Nutz- und Signalisierungsinformationen ni, si gemultiplext übertragen. Beispielsweise werden digitalisierte Sprachinformationen mit einer Übertragungsgeschwindigkeit von 64 KBit/s über die PCM-orientierte Systembusschnittstelle in jede Richtung zu einem seriellen Bitstrom von 4096 KBit/s gemultiplext, wobei in einem der 64 KBit/s/Kanäle die Signalisierungsinformationen beispielsweise gemultiplext oder alternativ paketweise übermittelt werden.

In der zentralen Rechnereinrichtung ZRE ist des weiteren eine weitere PCM-orientierte Systembusschnittstelle PCM und zusätzlich eine Rechnerbusschnittstelle BZR realisiert. Die PCM-orientierte Systembusschnittstelle PCM ist mit dem Koppelfeld der zentralen Rechnereinheit ZRE und die Rechnerbusschnittstelle BZR mit der Rechnereinheit RE der zentralen Rechnereinrichtung ZRE verbunden. An diese beiden Schnittstellen BZR, PCM ist das erfindungswesentliche Fernübertragungsmodul FUM angeschlossen, wozu dieses mit gleichartig realisierten Schnittstellen BZR, PCM ausgestattet ist.

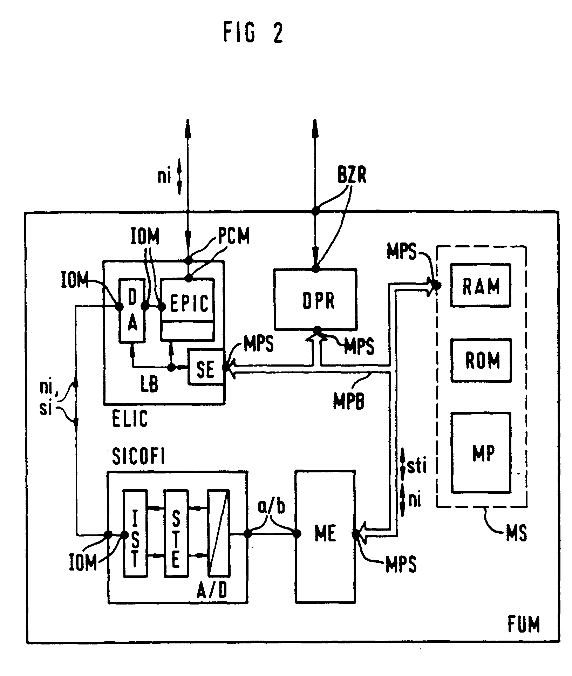

In Fig. 2 ist in einem Blockschaltbild der schaltungstechnische Aufbau des Fernübertragungsmoduls FUM dargestellt. Für den Informationsaustausch zwischen dem Fernübertragungsmodul FUM und der zentralen Rechnereinrichtung ZRE ist ein Zugriffsspeicher DPR vorgesehen, der mit einer Rechnerbusschnittstelle BZR ausgestattet ist. Der Zugriffsspeicher DPR ist vorzugsweise durch die bekannten "Dual-Port-RAM's realisiert, wobei die Größe des Zugriffsspeichers DPR auf die zu übermittelnde Informationsmenge von oder zur Servicezentrale SZE und die Übertragungsgeschwindigkeit abgestimmt ist. In dem Zugriffsspeicher DPR ist eine für den Anschluß eines Mikroprozessorsystems MS vorgesehene Prozessorschnittstelle MPS realisiert. An diese Prozessorschnittstelle MPS ist über einen Mikroprozessorbus BMP - der beispielsweise durch Adress-Steuer und Datenleitungen gebildet ist - ein Mikroprozessorsystem MS angeschlossen. Das durch strichlierte Linien bestimmte Mikroprozessorsystem MS ist beispielsweise durch einen 1 Chip-Mikroprozessor realisiert, in dem ein handelsüblicher Mikroprozessor MP, ein Lesespeicher ROM und ein Schreib-Lesespeicher RAM enthalten ist. Alternativ hierzu ist das Mikroprozessorsystem MS durch einzelne Mikroprozessor- und Speicherschaltkreise realisierbar. Der Anschluß an den Mikroprozessorbus BMP wird hierbei durch eine Mikroprozessorschnittstelle MPS bewirkt.

Der Mikroprozessorbus MPB ist des weiteren an eine in einer Schnittstelleneinheit SE realisierten Prozessorschnittstelle MPS geführt, wobei die Schnittstelleneinheit SE in einer Peripheriesteuerung ELIC angeordnet ist. Die Schnittstelleneinheit SE ist innerhalb der Peripheriesteuerung ELIC über einen lokalen Bus LB mit einer Vermittlungseinheit EPIC und einer Signalisierungskanalsteuerung DA verbunden. In der Vermittlungseinheit EPIC bzw. der Peripheriesteuerung ELIC ist eine weitere PCM-orientierte Systembusschnittstelle PCM realisiert, die an die entsprechende Schnittstelle PCM in der zentralen Rechnereinrichtung ZRE geführt ist. In der Signalisierungskanalsteuerung DA ist für den Anschluß einer SICOFI-Einheit SICOFI eine interne, ISDN-orientierte Systembusschnittstelle IOM realisiert. Diese interne, ISDN-orientierte Systembusschnittstelle IOM ist entsprechend einer ISDN-konformen Verarbeitung der zu übermittelnden Nutz- und Signalisierungsinformationen ni, si orientiert. Dies bedeutet, daß für die Nutzinformationsübermittlung 64 KBit/s/Kanäle und für die Signalisierungsübermittlung Übertragungskanäle mit geringeren Geschwindigkeiten vorgesehen sind. Die Nutz- und Signalisierungsinformationen ni, si liegen in der internen, ISDN-orientierten Systembusschnittstelle IOM in gemultiplexter Form vor. Die Systembusschnittstelle IOM wird durch die Signalisierungskanalsteuerung DA geführt und an die Vermittlungseinheit EPIC geleitet, wobei in der Signalisierungskanalsteuerung DA das Einfügen, Abzweigen von Signalisierungsinformationen si und das Sperren bzw. Zuteilen von Signalisierungskanälen bewirkt wird.

In der Vermittlungseinheit EPIC ist ein zeitschlitzgesteuertes Koppelfeld implementiert, mit dessen Hilfe die zu übermittelnden Nutzinformationen ni an die Servicezentrale SZE kommunikationssystemintern vermittelt, d.h. in den entsprechenden Zeitschlitz eingefügt werden. Diese eingefügten Nutzinformationen ni gelangen über die PCM-orientierte Systembusschnittstelle PCM zum Koppelfeld KF der zentralen Rechnereinrichtung ZRE. Mit Hilfe der in der zentralen Rechnereinrichtung ZRE implementierten Rechnereinheit RE und des Koppelfeldes KF werden diese Nutzinformationen ni vermittelt, d.h. an die Verbindungsleitungsanschlußeinheit VAE weitergeleitet und von dort über dessen Anschluß A über die Verbindungsleitung VL an das Kommunikationsnetz KN geführt. Die Signalisierung mit dem Kommunikationsnetz KN wird entsprechend von der zentralen Rechnereinrichtung ZRE übermittelten Signalisierungsinformation si in der Verbindungsleitungsanschlußeinheit VAE abgewickelt. Analog hierzu werden vom Kommunikationsnetz KN bzw. von der Servicezentrale SZE übermittelte Informationen ni, si gemäß der kommunikationsnetzspezifischen Signalisierungsprozedur über die Verbindungsleitungsanschlußeinheit VAE und über die PCM-orientierte Systembusschnittstelle PCM an die zentrale Rechnereinrichtung ZRE übermittelt. Dort werden die Signalisierungsinformationen si bewertet, d.h. die angegebene Zielrufnummer wird bewertet, und bei Feststellen einer Signalisierungsinformation si, die dem Fernübertragungsmodul FUM zugeordnet ist, werden die dieser Signalisierungsinformation si zugeordneten Nutzinformationen ni über die PCM-orientierte Systembusschnittstelle PCM an das Fernübertragungsmodul FUM übermittelt.

In diesem werden diese Nutzinformationen ni über die Vermittlungseinheit EPIC und die Signalisierungskanalsteuerung DA über die interne, ISDN-orientierte Systembusschnittstelle IOM an die SICOFI-Einheit SICOFI gesteuert. In dieser werden die in digitaler Form vorliegenden Nutzinformationen ni in analoge Fernsprechsignale umgewandelt, sofern die Nutzinformationen über ein Fernsprechnetz übertragen werden. Hierzu ist in der SICOFI-Einheit eine Schnittstelleneinheit IST angeordnet, in der eine interne, ISDN-orientierte Systembusschnittstelle IOM realisiert ist. Die Nutzinformationen ni gelangen über eine Steuereinrichtung STE zu einer Analog/Digital-Umsetzeinrichtung A/D, in der die digitalen Nutzinformationen ni in analoge Fernsprechsignale umgewandelt werden und umgekehrt. Des weiteren werden in der Analog/Digital-Umsetzeinrichtung A/D die analogen Nutzinformationen entsprechend den Bedingungen einer analogen Fernsprechschnittstelle a/b gefiltert. Die analoge Fernsprechschnittstelle a/b ist folglich in der Analog/Digital - Umsetzeinrichtung a/b realisiert.

Diese analoge Fernsprechschnittstelle a/b ist mit einer in einer Modemeinheit ME gleichartig realisierten analogen Fernsprechschnittstelle a/b verbunden. In der Modemeinheit ME werden die analogen Fernsprechsignale in digitale Informationssignale beispielsweise mit den physikalischen Eigenschaften gemäß der CCITT-Empfehlung V.32 bis umgesetzt und umgekehrt. Die Modemeinheit ME ist beispielsweise durch einen Satz integrierter Schaltkreise RC144ACL der Firma Rockwell realisiert.

Die Modemeinheit ME ist des weiteren mit einer Prozessorschnittstelle MPS ausgestattet, an die der Mikroprozessorbus MPB angeschlossen ist. Über diese Prozessorschnittstelle MPS wird die Modemeinheit ME durch das Mikroprozessorsystem MS gesteuert. Hierzu ist ein festgelegtes Protokoll für die Übermittlung der Nutz- und Steuerinformationen ni, sti vorgesehen. Vorteilhaft sind Protokolle, bei denen Steuerinformationen innerhalb eines seriellen Nutzinformationsstromes übermittelbar sind. Ein derartiges Protokoll ist beispielsweise in der EP 0 067 395 angegeben, bei dem die Umschaltung zwischen Steuermodus und Übertragungsmodus dadurch bewirkt wird, daß einer vorbestimmten Sequenz von Datensignalen eine vorbestimmte Zeitdauer auftritt, während der keine Datensignale übermittelt werden. Mit Hilfe dieser Umschaltung von dem Übermittlungs- in den Steuermodus durch entsprechende Steuer- und Nutzinformationen ni, sti wird die Modemeinheit ME in die erforderlichen Betriebszustände gesteuert. Die hierzu erforderlichen Steuerinformationen sti werden über das Mikroprozessorsystem MS und an die Modemeinheit ME übermittelt. So wird beispielsweise bei einer gewünschten Übermittlung von Nutzinformationen ni an die Servicezentrale SZE über ein Fernsprechnetz eine Steuerinformation sti gebildet und an die Modemeinheit ME übermittelt. Durch diese Steuerinformation sti wird die Modemeinheit ME in einen Betriebszustand gesteuert, bei dem sie die vom Mikroprozessorsystem MS übermittelten Nutzinformationen ni entsprechend der CCITT-Empfehlung V.32 bis moduliert und folglich als analoge Nutzinformationen ni an die a/b-Fernsprechschnittstelle a/b übermittelt. Analog hierzu werden von der Servicezentrale SZE über das Kommunikationsnetz KN und über die Verbindungsleitungsanschlußeinheit VAE sowie durch das Koppelfeld KF vermittelte Nutzinformationen ni im Fernübertragungsmodul FUM über die Peripheriesteuerung ELIC, die SICOFI-Einheit SICOFI und die Modemeinheit ME übermittelt und im Zugriffsspeicher DPR zwischengespeichert. Von dort kann die zentrale Rechnereinrichtung ZRE über die Rechnerbusschnittstelle BZR die hinterlegten Nutzinformationen ni abrufen und entsprechend den übermittelten Nutzinformationen ni im Sinne des Fernsteuerns des Kommunikationssystems KS die entsprechenden vermittlungstechnischen und betriebstechnischen Prozeduren initialisieren bzw. steuern.

Analog hierzu werden Nutzinformationen ni, die von der zentralen Rechnereinrichtung ZRE über die Rechnerbusschnittstelle BZR an den Zugriffsspeicher DPR übermittelt und dort zwischengespeichert werden, mit Hilfe des Mikroprozessorsystems MS über die Modemeinheit ME - wie erläutert -, die SICOFI-Einheit SICOFI und die Peripheriesteuerung ELIC an das Koppelfeld KF gesteuert, um in diesem über einen durch die Rechnereinheit RE eingestellten Vermittlungspfad an die Verbindungsleitungsanschlußeinheit VAE vermittelt zu werden. Über den ebenfalls durch die Rechnereinheit RE gesteuerten Anschluß A der Verbindungsleitungsanschlußeinheit VAE werden die Nutzinformationen ni an das Kommunikationsnetz an die Servicezentrale SZE übermittelt. Die Signalisierung mit dem Kommunikationsnetz KN wird hierbei durch die Verbindungsleitungsanschlußeinheit VAE bewirkt, wobei die Ziel- und Ursprungsrufnummer in der zentralen Rechnereinheit ZRE ermittelt bzw. bestimmt und an die Verbindungsleitungsanschlußeinheit VAE übermittelt werden.

Bei einer Übermittlung von Nutzinformationen ni von oder zu der Servicezentrale über ein ISDN-Kommunikationsnetz ist eine Modulation bzw. Demodulation der Nutzinformationen ni nicht erforderlich und folglich werden die in der zentralen Rechnereinrichtung ZRE gebildeten Nutzinformationen ni im Zugriffsspeicher zwischengespeichert und anschließend nicht über die Modemeinheit ME sowie SIICOFI-Einheit SICOFI gesteuert, sondern mit Hilfe des Mikroprozessorsystems MS direkt im Sinne des Einfügens in einen Nachrichtenkanal an die Mikroprozessorschnittstelle MPS der Peripheriesteuerung ELIC übermittelt. Die Signalisierung mit dem ISDN-Kommunikationsnetz KN wird im wesentlichen in der Verbindungsleitungsanschlußeinrichtung VAE unter Steuerung - Rufnummernbestimmung - der zentralen Rechnereinrichtung ZRE durchgeführt. An welches Kommunikationsnetz KN - Fernsprech- oder ISDN-Netz - die Servicezentrale SZE bzw. die Verbindungsleitungsanschlußeinheit VAE angeschlossen ist, ist in der zentralen Rechnereinrichtung ZRE - z.B. in der Datenbasis - hinterlegt. Die Einstellung des Fernübertragungsmoduls - d.h. Aktivieren unterschiedlicher Steuerroutinen im Mikroprozessorsystem - in den Fernsprechnetz- oder ISDN-Netzmodus wird demzufolge durch die zentrale Rechnereinrichtung ZRE über die Rechnerbusschnittstelle BZR durchgeführt.

Im Fernübertragungsmodul FUM wird die SICOFI-Einheit SICOFI besonders vorteilhaft durch den integrierten Schaltkreis PEB2260 (Dual Channel Codec Filter) und die Vermittlungseinheit ELIC besonders vorteilhaft durch den integrierten Telekommunikationsschaltkreis PEB20550 der Firma Siemens realisiert.

## Patentansprüche

1. Fernsteuerbares Kommunikationssystem (KS) mit einer zentralen Rechnereinrichtung (ZRE), an die über zumindest eine PCM-orientierte Systembusschnittstelle (PCM) zumindest eine mit Kommunikationsendgeraten (KE) verbindbare Teilnehmeranschlußeinrichtung (TAE) und zumindest eine Verbindungsleitungsanschlußeinrichtung (VAE) angeschlossen sind und im Sinne eines Informationsaustausches zum Fernsteuern des Kommunikationssystems dieses über ein Kommunikationsnetz mit einer Servicezentrale verbindbar ist,
**dadurch gekennzeichnet,**
daß im Kommunikationssystem (KS) im Sinne des Informationsaustausches mit der Servicezentrale (SZE) ein auf eine kommunikationsnetzspezifische Informationsübertragung und Signalisierung einstellbares Fernübertragungsmodul (FUM) angeordnet ist,
- in dem eine Rechnerbusschnittstelle (BZR) realisiert ist, die mit einer Rechnerbusschnittstelle (BZR) der zentralen Rechnereinrichtung (ZRE) verbunden ist und über die gemäß einem festgelegten Protokoll Nutz- und Steuerinformationen (ni, sti) übertragen werden, und
- in dem eine PCM-orientierte Systembusschnittstelle (PCM) realisiert ist, die an eine PCM-orientierte Systembusschnittstelle (PCM) der zentralen Rechnereinrichtung (ZRE) geführt ist und über die Nutz- und Signalisierungsinformationen (ni, si) übermittelt werden.

2. Fernsteuerbares Kommunikationssystem nach Anspruch 1,
**dadurch gekennzeichnet,**
daß das Fernübertragungsmodul (FUM) durch
- ein den Informationsaustausch zwischen zentraler Rechnereinrichtung (ZRE) und dem Fernübertragungsmodul (FUM) koordinierenden Zugriffsspeicher (DPR) mit einer Rechnerbusschnittstelle (BZR) und einer Prozessorschnittstelle (MPS),
- eine Nutzinformationen (ni) im Sinne einer analogen Informationsübertragung modulierende bzw. demodulierende Modemeinheit (ME) mit einer Prozessorschnittstelle (MPS) und einer analogen Fernsprechschnittstelle (a/b),
- eine Signalisierungs-Kodierungs-/Dekodierungs- und Filtereinheit mit einer mit der analogen Fernsprechschnittstelle (a/b) der Modemeinheit (ME) verbundenen analogen Fernsprechschnittstelle (a/b) und einer internen, ISDN-orientierten Systembusschnittstelle (IOM2),
- eine die Vermittlung der Nutzinformationen (ni) bewirkende und die Signalisierungsinformation (si) koordinierende Peripheriesteuerung (ELIC),
· die eine mit der internen, ISDN-orientierten Systembusschnittstelle (IOM) der SICOFI-Einheit (SICOFI) verbundene interne, ISDN-orientierte Systembusschnittstelle (IOM),
· eine Prozessorschnittstelle (MPS) und
· eine PCM-orientierte Systembusschnittstelle (PCM) aufweist,
- und durch ein das Fernübertragungsmodul (FUM) steuerndes und überwachendes und die Steuerung des Informationsflusses im Fernübertragungsmodul (FUM) für unterschiedliche Kommunikationsnetze (KN) bewirkendes Mikroprozessorsystem (MS) gebildet ist, deren Prozessorschnittstelle (MPS) über einen Mikroprozessorbus (MPB) mit den Prozessorschnittstellen (MPS) der Peripheriesteuerung (ELIC), des Zugriffsspeichers (DPR) und der Modemeinheit (ME) verbunden ist.

3. Fernsteuerbares Kommunikationssystem nach Anspruch 2,
**dadurch gekennzeichnet,**
daß die Peripheristeuerung (ELIC) durch
- eine die interne, ISDN-orientierte Systembusschnittstelle (IOM) realisierende und eine die Signalisierungsinformationen (si) steuernde Signalisierungskanalsteuerung (DA),
- eine die Nachrichteninformationen (ni) vermittelnde und zumindest eine PCM-orientierte Busschnittstelle (PCM) realisierende Vermittlungseinheit (EPIC) und
- eine die Signalisierungs- und Nachrichteninformationen (si,ni) seriell übermittelnde, die Prozessorschnittstelle (MPS) realisierende Schnittstelleneinheit (SE) gebildet ist.

4. Fernsteuerbares Kommunikationssystem nach einem der Ansprüche 2 bis 3,
**dadurch gekennzeichnet,**
daß die interne, ISDN-orientierte Systembusschnittstelle (IOM) durch
- jeweils eine in Richtung zentraler Rechnereinrichtung (ZRE) und Modemeinrichtung (ME) wirkende Datenleitung,
- eine Rahmensynchronisiersignale übermittelnde Rahmensynchronleitung, und
- eine Datenübernahmetaktleitung gebildet ist.

5. Fernsteuerbares Kommunikationssystem nach einem der Ansprüche 2 bis 4,
**dadurch gekennzeichnet,**
daß die Modemeinrichtung (ME) hinsichtlich des Informationsübertragungsverfahrens gemäß der CCITT-Empfehlung V.32 bis realisiert ist.

6. Fernsteuerbares Kommunikationssystem nach einem der vorhergehenden Ansprüche,
**dadurch gekennzeichnet,**
daß eine zumindest ein Kommunikationssystem (KS) fernsteuernde Servicezentrale (SZE) über ein öffentliches oder privates Kommunikationsnetz (KN) mit einem Anschluß (A) der Verbindungsleitungsanschlußeinrichtung (VAE) verbindbar ist.

7. Fernsteuerbares Kommunikationssystem nach Anspruch 6,
**dadurch gekennzeichnet,**
daß der Informationsaustausch zwischen der Servicezentrale (SZE) und der zentralen Rechnereinrichtung (ZRE) des jeweiligen Kommunikationssystems (KS) durch ein standardisiertes Übertragungsprotokoll gemäß der CCITT-Empfehlung X.25 bewirkt wird.

8. Fernsteuerbares Kommunikationssystem nach einem der vorhergehenden Ansprüche,
**dadurch gekennzeichnet,**
daß das Fernübertragungsmodul (FUM) durch ein auf eine Baugruppe der zentralen Rechnereinrichtung (ZRE) aufsteckbares Fernübertragungsmodul (FUM) realisiert ist.

9. Fernsteuerbares Kommunikationssystem nach einem der vorhergehenden Ansprüche,
**dadurch gekennzeichnet,**
daß der Zugriffsspeicher (DPR), die Modemeinrichtung (ME), die SICOFI-Einheit (SICOFI) und die Peripheriesteuerung (ELIC) durch integrierte Telekommunikationsschaltkreise realisiert sind.

10. Fernsteuerbares Kommunikationssystem nach einem der vorhergehenden Ansprüche,
**dadurch gekennzeichnet,**
daß das Fernübertragungsmodul (FUM) in einen
- die analoge Fernsprechinformationsübertragung und zusammen mit dem Kommunikationssystem (KS) die Fernsprechsignalisierung realisierenden Fernsprechnetzmodus oder in einen
- die digitale Informationsübermittlung und zusammen mit dem Kommunikationssystem (KS) die ISDN-Signalisierung realisierenden ISDN-Netzmodus
einstellbar ist.

## Claims

1. Remotely controllable communications system (KS) having a central computer device (ZRE) to which, via at least one PCM-oriented system bus interface (PCM), at least one subscriber line unit (TAE), which can be connected to communications terminals (VAE), and at least one trunk line unit (VAE) are connected and, for the purposes of information interchange for remotely controlling the communications system this communications system can be connected via a communications network to a service centre,
characterized
in that a remote transmission module (FUM), which can be set for communications-network-specific information transmission and signalling, is arranged in the communications system (KS) for the purpose of information interchange with the service centre (SZE),
- in which there is a computer bus interface (BZR) which is connected to a computer bus interface (BZR) of the central computer device (ZRE) and via which wanted information (ni) and control information (si) are transmitted in accordance with a defined protocol, and
- in which there is a PCM-oriented system bus interface (PCM), which is connected to a PCM-oriented system bus interface (PCM) of the central computer device (ZRE), and via which the wanted information (ni) and signalling information (si) are transmitted.

2. Remotely controllable communications system according to Claim 1,
characterized
in that the remote transmission module (FUM) is formed by
- an access memory (DPR), which coordinates the information interchange between the central computer device (ZRE) and the remote transmission module (FUM) and has a computer bus interface (BZR) and a processor interface (MPS),
- a modem unit (ME), which modulates and demodulates wanted information (ni) for the purposes of analogue information transmission and has a processor interface (MPS) and an analogue remote speech interface (a/b)
- a signalling coding/decoding and filter unit having an analogue remote speech interface (a/b), which is connected to the analogue remote speech interface (a/b) of the modem unit (ME), and an internal, ISDN-oriented system bus interface (IOM2),
- a peripheral controller (ELIC) which effects the switching of the wanted information (ni) and coordinates the signalling information (si),
• which has an internal, ISDN-oriented system bus interface (IOM) which is connected to the internal, ISDN-oriented system bus interface (IOM) in the SICOFI unit (SICOFI),
• a processor interface (MPS) and
• a PCM-oriented system bus interface (PCM),
- and by a microprocessor system (MS) which controls and monitors the remote transmission module (FUM) and controls the information flow in the remote transmission module (FUM) for different communications networks (KN), the processor interface (MPS) of which microprocessor system (MS) is connected via a microprocessor bus (MPB) to the processor interfaces (MPS) of the peripheral controller (ELIC), of the access memory (DPR) and of the modem unit (ME).

3. Remotely controllable communications system according to Claim 2,
characterized
in that the peripheral controller (ELIC) is formed by
- a signalling channel controller (DA) which provides the internal, ISDN-oriented system bus interface (IOM) and controls the signalling information (si),
- a switching unit (EPIC) which switches the wanted information (ni) and provides at least one PCM-oriented bus interface (PCM), and
- an interface unit (SE) which transmits the signalling information (si) and wanted information (ni) in serial form and provides the processor interface (MPS).

4. Remotely controllable communications system according to one of Claims 2 or 3,
characterized
in that the internal, ISDN-oriented system bus interface (IOM) is formed by
- in each case one data line which acts in the direction of the central computer device (ZRE) and the modem device (ME),
- a frame synchronization line which transmits frame synchronization signals, and
- a data transfer clock line.

5. Remotely controllable communications system according to one of Claims 2 to 4,
characterized
in that the information transmission method used by the modem device (ME) complies with CCITT Recommendation V.32 bis.

6. Remotely controllable communications system according to one of the preceding claims,
characterized
in that a service centre (SZE) which remotely controls at least one communications system (KS) can be connected via a public or private communications network (KN) to a connection (A) of the trunk line unit (VAE).

7. Remotely controllable communications system according to Claim 6,
characterized
in that the information interchange between the service centre (SZE) and the central computer device (ZRE) of the respective communications system (KS) uses a standardized transmission protocol in accordance with CCITT Recommendation X.25.

8. Remotely controllable communications system according to one of the preceding claims,
characterized
in that the remote transmission module (FUM) is provided by a remote transmission module (FUM) which can be plugged onto an assembly in the central computer device (ZRE).

9. Remotely controllable communications system according to one of the preceding claims,
characterized
in that the access memory (DPR), the modem device (ME), the SICOFI unit (SICOFI) and the peripheral controller (ELIC) are provided by integrated telecommunications circuits.

10. Remotely controllable communications system according to one of the preceding claims,
characterized
in that the remote transmission module (FUM) can be set to a
- remote speech network mode which provides the analogue remote speech information transmission and, together with the communications system (KS), the remote speech signalling, or to an
- ISDN network mode which provides the digital information transmission and, together with the communications system (KS), the ISDN signalling.

## Revendications

1. Système de communication télécommandé (KS), comportant une unité centrale (ZRE) à laquelle sont raccordés, par l'intermédiaire d'au moins une interface de bus de système (PCM) de type MIC, au moins une unité de raccordement d'abonné (TAE) pouvant être reliée à des terminaux de communication (KE) et au moins une unité de raccordement de ligne réseau (VAE) et, en vue d'un échange d'informations pour la commande à distance du système de communication, celui-ci pouvant être relié par l'intermédiaire d'un réseau de communication à un central d'exploitation,
caractérisé par le fait que
un module de transmission (FUM), réglable sur une transmission d'information et une signalisation spécifiques au réseau de communication, est agencé dans le système de communication (KS) en vue de l'échange d'informations avec le central d'exploitation (SZE), module de transmission dans lequel sont mises en oeuvre
- une interface de bus de processeur (BZR) qui est reliée à une interface de bus de processeur (BZR) de l'unité centrale (ZRE) et par l'intermédiaire de laquelle des informations utiles et de commande (ni, sti) sont transmises selon un protocole déterminé, et
- une interface de bus de système (PCM) de type MIC qui est conduite à une interface de bus de système (PCM) de type MIC de l'unité centrale (ZRE) et par l'intermédiaire de laquelle des informations utiles et de signalisation (ni, si) sont transmises.

2. Système de communication télécommandé selon la revendication 1,
caractérisé par le fait que
le module de transmission (FUM) est formé par
- une mémoire d'accès (DPR) qui coordonne l'échange d'informations entre l'unité centrale (ZRE) et le module de transmission (FUM) et qui comporte une interface de bus de processeur (BZR) et une interface de processeur (MPS),
- une unité modem (ME) qui module et démodule des informations utiles (ni) en vue d'une transmission d'information analogique et qui comporte une interface de processeur (MPS) et une interface téléphonique analogique (a/b),
- une unité de signalisation, codage/décodage et filtrage qui comporte une interface téléphonique analogique (a/b) reliée à l'interface téléphonique analogique (a/b) de l'unité modem (ME) et une interface de bus de système (IOM2) interne et orientée RNIS,
- une commande périphérique (ELIC), qui effectue la commutation des informations utiles (ni), qui coordonne les informations de signalisation (si) et qui comporte
· une interface de bus de système (IOM) interne et orientée RNIS qui est reliée à l'interface de bus de système (IOM) interne et orientée RNIS de l'unité SICOFI,
· une interface de processeur (MPS) et
· une interface de bus de système (PCM) de type MIC,
- et un système à microprocesseur (MS) qui commande et contrôle le module de transmission (FUM), qui effectue la commande du flux d'informations dans le module de transmission (FUM) pour différents réseaux de communication (KN) et dont l'interface de processeur (MPS) est reliée par l'intermédiaire d'un bus de microprocesseur (MPB) aux interfaces de processeur (MPS) de la commande périphérique (ELIC), de la mémoire d'accès (DPR) et de l'unité modem (ME).

3. Système de communication télécommandé selon la revendication 2,
caractérisé par le fait que
la commande périphérique (ELIC) est formée par
- une commande de canal de signalisation (DA) qui met en oeuvre l'interface de bus de système (IOM) interne et orientée RNIS et qui guide les informations de signalisation (si),
- une unité de commutation (EPIC) qui commute les informations utiles (ni) et qui met en oeuvre au moins une interface de bus (PCM) de type MIC, et
- une unité d'interface (SE) qui transmet en série les informations utiles (ni) et de signalisation (si) et qui met en oeuvre l'interface de processeur (MPS).

4. Système de communication télécommandé selon l'une des revendications 2 à 3,
caractérisé par le fait que
l'interface de bus de système (IOM) interne et orientée RNIS est formée par
- à chaque fois une ligne de données agissant en direction de l'unité centrale (ZRE) et du dispositif modem (ME),
- une ligne de synchronisation de trame transmettant des signaux de synchronisation de trame, et
- une ligne de cadence de transfert de données.

5. Système de communication télécommandé selon l'une des revendications 2 à 4,
caractérisé par le fait que
le dispositif modem (ME) est mis en oeuvre pour le procédé de transmission d'informations selon la recommandation V.32 bis du CCITT.

6. Système de communication télécommandé selon l'une des revendications précédentes,
caractérisé par le fait que
un central d'exploitation (SZE) télécommandant au moins un système de communication (KS) peut être relié par l'intermédiaire d'un réseau de communication (KN) public ou privé à un raccordement (A) du dispositif de raccordement de ligne réseau (VAE).

7. Système de communication télécommandé selon la revendication 6,
caractérisé par le fait que
l'échange d'informations entre le central d'exploitation (SZE) et l'unité centrale (ZRE) du système de communication (KS) respectif est mis en oeuvre avec un protocole de transmission standard selon la recommandation X.25 du CCITT.

8. Système de communication télécommandé selon l'une des revendications précédentes,
caractérisé par le fait que
le module de transmission (FUM) est mis en oeuvre par un module de transmission (FUM) pouvant être placé sur une carte de l'unité centrale (ZRE).

9. Système de communication télécommandé selon l'une des revendications précédentes,
caractérisé par le fait que
la mémoire d'accès (DPR), le dispositif modem (ME), l'unité SICOFI et la commande périphérique (ELIC) sont mis en oeuvre par des circuits intégrés de télécommunication.

10. Système de communication télécommandé selon l'une des revendications précédentes,
caractérisé par le fait que
le module de transmission (FUM) peut être réglé
- dans un mode de réseau téléphonique mettant en oeuvre la transmission d'information téléphonique analogique et conjointement au système de communication (KS) la signalisation téléphonique ou
- dans un mode de réseau RNIS mettant en oeuvre la transmission d'information numérique et conjointement au système de communication (KS) la signalisation RNIS.
